(19) Europäisches Patentamt
European Patent Office
Office européen des brevets

(11) **EP 0 516 086 B1**

(12) **EUROPEAN PATENT SPECIFICATION**

(45) Date of publication and mention
of the grant of the patent:
**05.11.1997 Bulletin 1997/45**

(51) Int Cl.⁶: **G11B 5/66**

(21) Application number: **92108953.8**

(22) Date of filing: **27.05.1992**

(54) **Magnetiic recording medium**

Magnetischer Aufzeichnungsträger

Support d'enregistrement magnétique

(84) Designated Contracting States:
**AT DE FR GB**

(30) Priority: **30.05.1991 JP 155752/91**
**30.05.1991 JP 155753/91**
**30.05.1991 JP 155754/91**

(43) Date of publication of application:
**02.12.1992 Bulletin 1992/49**

(73) Proprietor: **SONY CORPORATION**
**Tokyo (JP)**

(72) Inventors:
• **Ebine, Yoshihito,**
**c/o Sony Magnetic Products, Inc.**
**Shinagawa-ku, Tokyo (JP)**
• **Ito, Jota, c/o Sony Magnetic Products, Inc.**
**Shinagawa-ku, Tokyo (JP)**
• **Sasaki, Toshikazu,**
**c/o Sony Magnetic Products, Inc**
**Shinagawa-ku, Tokyo (JP)**
• **Arai, Takeo, c/o Sony Magnetic Products, Inc**
**Shinagawa-ku, Tokyo (JP)**
• **Kudo, Hiroshi, c/o Sony Magnetic Products, Inc**
**Shinagawa-ku, Tokyo (JP)**

(74) Representative: **Müller, Frithjof E., Dipl.-Ing.**
**Patentanwälte**
**MÜLLER & HOFFMANN,**
**Innere Wiener Strasse 17**
**81667 München (DE)**

(56) References cited:
**US-A- 4 722 869**

• **PATENT ABSTRACTS OF JAPAN vol. 12, no. 363 (P-764)(3210) 29 September 1988**
• **PATENT ABSTRACTS OF JAPAN vol. 8, no. 10 (P-248)(1447) 18 January 1984**
• **PATENT ABSTRACTS OF JAPAN vol. 13, no. 138 (P-852)(3486) 6 April 1989**
• **PATENT ABSTRACTS OF JAPAN vol. 6, no. 245 (P-159)(1123) 3 December 1982**
• **PATENT ABSTRACTS OF JAPAN vol. 6, no. 100 (P-121)(978) 9 June 1982**

## Description

The present invention relates to a magnetic tape suitable for reproducing data recorded thereon by a nontracking data reproducing system.

A helical scan recording system, which moves a magnetic head mounted on a rotary drum obliquely with respect to the running direction of a magnetic tape, has generally been employed in recording signals by a video tape recorder (VTR) and by a digital audio tape recorder (DATR). Being suitable for long-time recording and capable of miniaturizing the recording apparatus and of reducing the cost of the recording apparatus, the helical scan recording system is expected to be employed in a recording apparatus other than VTRs and DATRs, such as a business digital memory for recording minutes of meetings.

Incidentally, in reproducing data recorded by the helical scan recording system, the magnetic head must trace recording tracks accurately. To enable accurate tracking, ATF signals for tracking are recorded respectively for tracks together with recording data. In reproducing recorded data, the magnetic head detects the ATF signal, determines a positional error, i.e., deviation from the track, on the basis of the ATF signal, and provides an error signal representing the positional error, and then a tracking servocircuit controls the position of the magnetic head on the basis of the error signal. Accordingly, the recording/reproducing apparatus employing the helical scan recording system needs, in addition to a recording/reproducing system, a complicated servomechanism, and hence further miniaturization of the recording apparatus employing the helical scan recording system is difficult. Therefore, the current helical scan tracking system needs improvements to enable the application of the same to a business digital memory, which must have a compact, lightweight construction.

Recently, a nontracking data reproducing system, which requires a servomechanism of a simple construction, has been proposed. In reproducing data recorded by the helical scan recording system by the nontracking data reproducing system, the magnetic head is rotated at a rotating speed twice or more than twice a rotating speed at which the magnetic head is rotated in recording the data to read all the data recorded on a magnetic tape without missing any data without requiring a complicated tracking servomechanism.

In recording data on a magnetic tape by the nontracking data reproducing system, track data obtained by blocking input data are recorded on tracks oblique to the running direction of the magnetic tape by a rotary recording/reproducing head provided with magnetic heads A and B differing from each other in azimuth angle (double-azimuth recording head). In reproducing the thus recorded data, the rotary recording reproducing head is rotated at a rotating speed twice a rotating speed at which the rotary recording/reproducing head is rotated in recording the data. Then, adjacent traces of the magnetic heads overlap each other, so that all the recorded data can be reproduced without missing any data. The data read by the magnetic heads are written in a DRAM (dynamic read-and-write memory) and the data are rearranged according to frame addresses and block addresses attached thereto to reproduce the same. Since the magnetic heads need not trace the tracks precisely in reproducing recorded data by the nontracking data reproducing system, the recording/reproducing apparatus employing the nontracking data reproducing system need not be provided with the tracking servocircuit which controls tracking on the basis of ATF signals, and can be formed in a compact, light weight construction.

As mentioned above, the magnetic heads of a DATR of the conventional helical scanning system must precisely be located relative to tracks and hence a highly accurate loading mechanism is essential to such a DATR. On the other hand, an apparatus of a nontracking data reproducing system need not be provided with any highly accurate loading mechanism. Accordingly, it is possible to load a recording/reproducing apparatus with a magnetic tape in a nonloading system, in which a tape path can be formed simply by advancing the rotary drum toward the magnetic tape, by making the tape guide shafts of the tape cassette function as the vertical guide and inclined pins of the recording/reproducing apparatus. Such possibility enables further miniaturization and reduction of weight of the apparatus of a nontracking data reproducing system.

Incidentally, since a recording/reproducing apparatus of a nontracking data reproducing system is capable of being formed in a compact, light weight construction, efforts have been made to develop a very small recording/reproducing apparatus of a nontracking data reproducing system capable of employing a tape cassette of a size approximately equal to that of a postage stamp on the order of 30.0 mm × 21.5 mm × 5.0 mm and containing a magnetic tape enabling continuous recording operation for a long time on the order of two hours. Such a magnetic tape must enable data to be recorded in a high recording density so that the data can be satisfactorily recorded and the recorded data can be satisfactorily reproduced. A possible magnetic tape for such recording is a so-called oblique evaporation magnetic tape fabricated by depositing a ferromagnetic metal, such as a CoNi alloy, in a magnetic metal thin film on a nonmagnetic substrate by oblique evaporation. This oblique evaporation magnetic tape has a ferromagnetic metal thin film 31 of a orthorhombic, columnar structure formed on a nonmagnetic substrate 32 as shown in Fig. 10, has a high saturation magnetization intensity and a high coercive force and is capable recording signals of wavelengths in a long wavelength region and a short wavelength region. Some oblique evaporation magnetic tapes have been used practically on VTRs and DATRs. However, the following problems arises in using the oblique evaporation magnetic tape on a recording/reproducing apparatus of a nontracking data reproducing system.

The oblique evaporation magnetic tape exhibits satisfactory recording/reproducing performance when a magnetic head slides along the oblique evaporation magnetic tape in the normal direction (a direction indicated by the arrow a in Fig. 10) with respect to the direction of growth of the orthorhombic, columnar structure of the ferromagnetic metal thin film. However, the recording/reproducing performance of the oblique evaporation magnetic tape is not satisfactory in respect of optimum recording current, phase characteristic, CN ratio and output characteristic when the magnetic head moves in the reverse direction (a direction indicated by the arrow b in Fig. 10) with respect to the direction of growth of the orthorhombic, columnar structure. Accordingly, satisfactory recording/reproducing operation can be achieved when the oblique evaporation magnetic tape is used on a recording/reproducing apparatus, such as a VTR or a DATR, having a magnetic head that moves only in the normal direction with respect to the direction of growth of the orthorhombic, columnar structure of the ferromagnetic metal thin film, and a recording/reproducing apparatus having a magnetic head that moves in opposite directions respectively along the upper and lower half of the oblique evaporation magnetic tape for forward-backward recording/reproducing operation is unable to record data on and reproduce data from the oblique evaporation magnetic tape satisfactorily when the magnetic head moves in the reverse direction with respect to the direction of growth of the orthorhombic, columnar structure.

Since the object of the recording/reproducing apparatus of a nontracking data reproducing system is to use a very small tape cassette and to secure a long operating time, the recording/reproducing apparatus is of a forward-backward recording/reproducing system. Accordingly, the foregoing problems in the oblique evaporation magnetic tape affect the performance of the recording/reproducing apparatus significantly.

An oblique evaporation magnetic tape of a two-layer construction proposed to solve those problems has a magnetic layer consisting of two oblique evaporation ferromagnetic metal thin films respectively having opposite growth directions. The phase characteristic and optimum current characteristic of this oblique evaporation magnetic tape of a two-layer construction remain constant regardless of the direction of movement of the magnetic head with respect to the direction of growth of the ferromagnetic metal thin film in contact with the magnetic head. Thus, the oblique evaporation magnetic tape of a two-layer construction is expected to be a magnetic recording medium suitable for a nontracking data reproducing system.

However, the characteristics of the oblique evaporation magnetic tape, such as CN ratio and reproduction output, other than the phase characteristic and the optimum current characteristic are affected by the direction of movement of the magnetic head with respect to the direction of growth of the ferromagnetic metal thin film in contact with the magnetic head. Therefore, the oblique evaporation magnetic tape is not perfectly satisfactory for use on a recording/reproducing apparatus of a forward-backward recording/reproducing system.

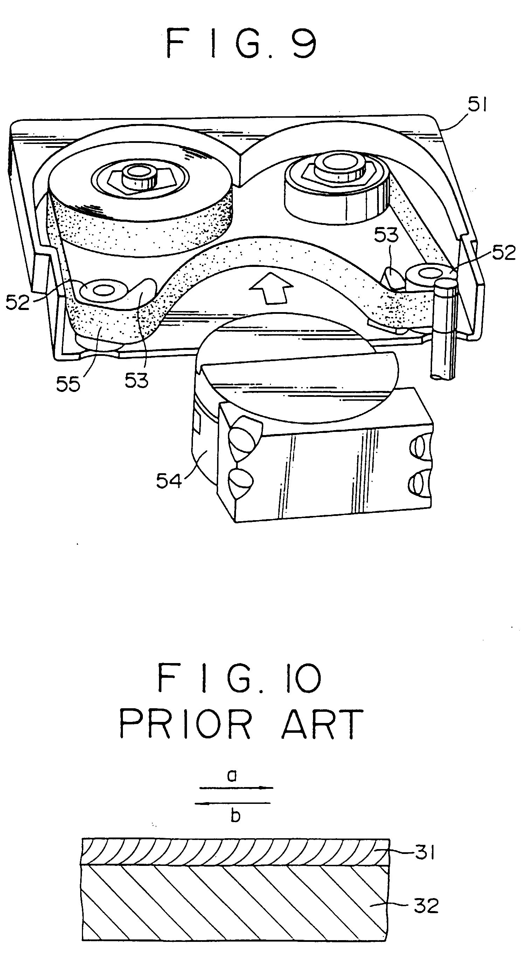

A recording/reproducing apparatus of a nontracking data reproducing system, in general, is provided with a tape loading mechanism of a nonloading system. As shown in Fig. 9, this tape loading mechanism of a nonloading system has a pinch roller 52 supported for rotation on a cassette 51, and a fixed, plastic tape guide post 53 for guiding a magnetic tape 55 so that the magnetic tape 55 is kept in contact with a rotary drum 54 when the rotary drum is advanced to an operating position. During recording/reproducing operation, the back surface, i.e., the surface not coated with the magnetic layer, of the magnetic tape 55 is in sliding contact with the tape guide post 53. Therefore, the friction between the tape guide post 53 and the magnetic tape 55 affects the running performance of the magnetic tape 55 greatly. When the conventional oblique evaporation magnetic tape is used on the tape loading mechanism of a nonloading system, the magnetic tape cannot run smoothly, the tape guide post 53 is abraded and, consequently, the reproduction output is disturbed.

JP-A-58-171 717 discloses a magnetic recording medium comprising a nonmagnetic substrate and a magnetic layer consisting of at least two ferromagnetic metallic thin films having different coercive forces. The total thickness of the magnetic thin films is about 200 nm, wherein each of the layers has substantially the same thickness. The resulting tape has a coercive force of 600 Oe as a whole.

The inventors of the present invention studied the difference between the CN ratio and output characteristics of a magnetic tape when the magnetic head slides in one direction relative to the magnetic tape and those of the same magnetic tape when the magnetic head slides in the reverse direction and have acquired knowledge that the CN ratio and output characteristics of the magnetic tape remain constant regardless of the direction of sliding movement of the magnetic head relative to the magnetic tape when the thickness of each of the ferromagnetic metal thin films of the magnetic layer, and the coercive force and remanent magnetic flux density of the magnetic layer are determined properly.

The present invention has been made on the basis of the foregoing knowledge and it is therefore an object of the present invention to provide a magnetic tape, for use on a recording/reproducing apparatus of a nontracking data reproducing system.

According to the present invention, there is provided a magnetic recording medium comprising: a nonmagnetic substrate; and a magnetic layer consisting of a first ferromagnetic metal thin film of an orthorhombic, columnar structure formed on the nonmagnetic substrate, and a second ferromagnetic metal thin film of an orthorhombic, columnar structure formed on the first ferromagnetic metal thin film ; wherein the direction of growth of the orthorhombic, columnar structure of the first ferromagnetic metal thin film and that of the orthorhombic. columnar structure of the second ferromagnetic metal thin film are opposite to each other, and the recording medium meets the conditions:

$$1600 \text{ Å} \leq \delta_1 + \delta_2 \leq 2000 \text{ Å}$$

$$1/3 \leq \delta_2/\delta_1 \leq 2/3$$

$$Hc \leq 1200 \text{ Oe}$$

$$Br \cdot (\delta_1 + \delta_2) \cdot Hc \geq 50 \text{ G} \cdot \text{cm Oe}$$

$$0.015 \leq Ra \leq 0.040$$

where $\delta_1$ is the thickness of the first ferrogmagnetic metal thin film, $\delta_2$ is the thickness of the second ferromagnetic metal thin film , Hc is the coercive force of the magnetic layer, Br is the remanent magnetic flux density of the magnetic layer, and Ra is the surface roughness of the back surface of the nonmagnetic substrate opposite to the surface of the same on which the magnetic layer is formed.

The above and other objects, features and advantages of the present invention will become more apparent from the following description taken in connection with the accompanying drawings, in which:

Fig. 1 is a schematic sectional view of a magnetic tape according to the present invention;
Fig. 2 is a schematic sectional view of an essential portion of a vacuum evaporation apparatus for depositing a ferromagnetic metal thin film;
Fig. 3 is a graph showing the variation of bit error rate with the thickness of a magnetic layer;
Fig. 4 is a graph showing the variation of bit error rate with thickness ratio;
Fig. 5 is a graph showing the relation between the energy product of a magnetic layer and the level of reproduced output signals;
Fig. 6 is a graph showing the relation between the coercive force of the magnetic layer and optimum recording current;
Fig. 7 is a typical view showing a mode of contact of a magnetic tape with a magnetic head, in which a portion of the magnetic tape is floating;
Fig. 8 is a typical view showing a mode of contact of a magnetic tape with a magnetic head, in which the magnetic tape is not in perfect contact with the curved surface of a magnetic head;
Fig. 9 is a perspective view of a tape drive of a noncontact system; and
Fig. 10 is a schematic sectional view of a conventional magnetic tape having a magnetic layer formed by oblique evaporation.

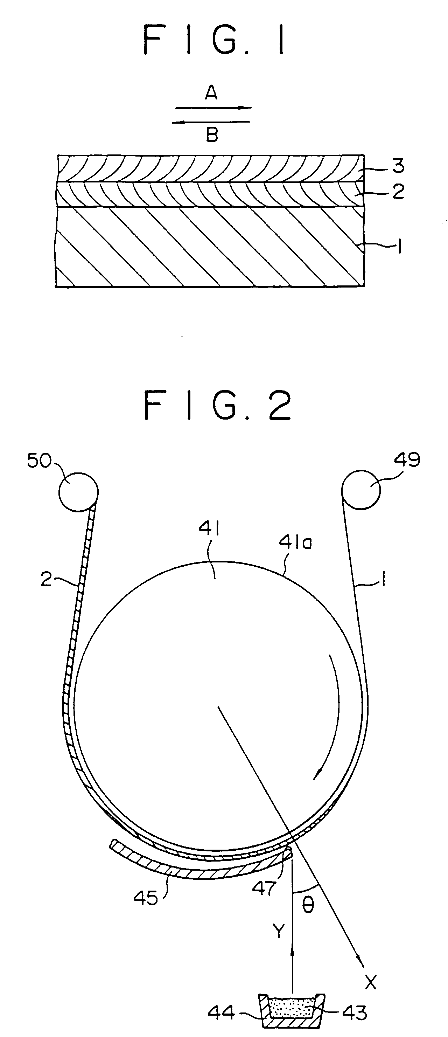

Referring to Fig. 1, a magnetic tape according to the present invention comprises a nonmagnetic substrate 1 and a magnetic layer consisting of a first ferromagnetic metal thin film 2 of an orthorhombic, columnar structure formed on the nonmagnetic substrate 1 and a second ferromagnetic metal thin film 3 of an orthorhombic, columnar structure. The direction of growth of the orthorhombic, columnar structure of the first ferromagnetic metal thin film 2 and that of the orthorhombic, columnar structure of the second ferromagnetic metal thin film 3 are opposite to each other. The first ferromagnetic metal thin film 2 and the second ferromagnetic metal thin film 3 are formed by, for example, oblique evaporation.

First, the first ferromagnetic metal thin film 2 is formed by oblique evaporation. Referring to Fig. 2, the nonmagnetic substrate 1 unwound from a feed roller 49 is wound around the outer circumference 41a of a drum 41 and taken up by a take-up roller 50. While the drum 41 is rotated to move the nonmagnetic substrate 1 in the direction of the arrow r, an evaporation source 43, i.e., a ferromagnetic metal to form a ferromagnetic metal thin film, contained in a crucible 44 is evaporated. The vapor Y of the evaporation source 43 falls on the surface of the nonmagnetic substrate 1 at an incidence angle $\theta$, i.e., the angle formed between the stream of the vapor Y arriving at the surface of the nonmagnetic substrate 1 and the perpendicular X to that surface at the point of arrival. The incidence angle $\theta$ at a point on the surface of the nonmagnetic substrate 1 decreases gradually as the nonmagnetic substrate advances and reaches a minimum at a position corresponding to a mask 45 disposed near the drum 41. Preferably, the range of variation of the incidence angle θ is 90° to 30°.

An oxygen gas inlet opening is formed bear the edge of the mask 45 to supply oxygen gas to the surface of the nonmagnetic substrate 1. The oxygen gas enhances the abrasion resistance of the magnetic layer. The oxygen gas supply rate is regulated so as to form a ferromagnetic thin film having desired characteristics including coercive force and remanent magnetic flux density.

Then, the second ferromagnetic metal thin film 3 is formed on the first ferromagnetic metal thin film 2 by oblique evaporation. In forming the second ferromagnetic metal thin film 3 of an orthorhombic, columnar structure having a direction of growth opposite to that of the orthorhombic, columnar structure of the first ferromagnetic metal thin film, the feed roller 49 and the take-up roller 50 are interchanged, the nonmagnetic substrate 1 unwound from the take-up roller 50 is wound around the outer circumference 41a of the drum 41, the drum 41 is turned in the direction of the arrow r and the same evaporation process is carried out.

There is no particular restriction on the material for forming the first ferromagnetic metal thin film 2 and the second ferromagnetic metal thin film 3; the material may be, for example, Co or an alloy of two or more of Co, Ni, Ta, Cr and Pt, such as a CoNi alloy, a CoPt alloy, a CoTa alloy or a CoCr alloy. The nonmagnetic substrate 1 may be any suitable one of substrates generally employed in forming magnetic recording medium of this kind.

If necessary, the nonmagnetic substrate 1 may be coated with a base film, and the magnetic tape may be provided with a back coating film and/or a top coating film. There is no particular restriction on the materials of the base film, the back coating and the top coating; any suitable materials generally employed in forming such coating films may be used.

There is no difference between the phase characteristic and optimum recording current of the magnetic tape having the magnetic layer of a two-layer construction thus fabricated when a magnetic head moves in the normal direction, i. e., the direction of the arrow A in Fig. 1, and those of the magnetic tape when the magnetic head moves in the reverse direction, i.e., the direction of the arrow B in Fig. 1. Accordingly, the magnetic tape is suitable for use on a recording/reproducing apparatus of a forward-backward recording/reproducing system.

To enable the magnetic tape to function at a high CN ratio and on a high reproduced output level on a forward-backward backward recording/reproducing apparatus of a nontracking data reproducing system, to enable satisfactory signal reproduction at a low bit error rate of $1 \times 10^{-2}$ or below and to enable the magnetic tape to run smoothly when driven by a tape drive of a nonloading system, the magnetic tape must meet the following conditions.

$$1600 \text{ Å} \leqq \delta_1 + \delta_2 \leqq 2000 \text{ Å}$$

$$1/3 \leqq \delta_2/\delta_1 \leqq 2/3$$

$$Hc \leqq 1200 \text{ Oe}$$

$$Br \cdot (\delta_1 + \delta_2) \cdot Hc \geqq 50 \text{ G·cm·Oe}$$

$$0.015 \leqq Ra \leqq 0.040$$

where $\delta_1$ is the thickness of the first ferromagnetic metal thin film 2, $\delta_2$ is the thickness of the second ferromagnetic metal thin film 3, Hc is the coercive force of the magnetic layer, Br is the remanent magnetic flux density of the magnetic layer, and Ra is the surface roughness of the backs surface of the nonmagnetic substrate 1.

If $\delta_1 + \delta_2$ is smaller than 1600 Å or greater than 2000 Å, bit error rate increases when the magnetic head moves in either the normal direction or the reverse direction relative to the magnetic tape and hence satisfactory reproduced signals cannot be produced. If $\delta_2/\delta_1$ is less than 1/3, bit error rate increases when the magnetic head is moved in the normal direction relative to the magnetic tape for recording/reproducing operation. If $\delta_2/\delta_1$ is greater than 2/3, bit error rate increases when the magnetic head moves in the reverse direction relative to the magnetic tape. Thus, magnetic tapes not meeting the foregoing conditions for $\delta_1$ and $\delta_2$ are not suitable for use on a recording/reproducing apparatus of a forward-backward recording/reproducing system.

The condition for $Br \cdot (\delta_1 + \delta_2) \cdot Hc$ is determined to secure a sufficiently high reproduced output in reproducing recorded data by a recording/reproducing apparatus of a nontracking data reproducing system. As is generally known, the reproduced output of a magnetic head is substantially proportional to the in-plane coercive force, remanent magnetic flux density and the thickness of the magnetic layer of the magnetic recording medium. Experiments showed that the reproduced output must be +3.5 dB or above to limit bit error rate below $1 \times 10^{-2}$ in reproducing recorded data by a recording/reproducing apparatus of a nontracking data reproducing system. $Br \cdot (\delta_1 + \delta_2) \cdot Hc$ must be 50 G·cm·Oe or above to obtain a reproduced output of +3.5 dB or above. If $Br \cdot (\delta_1 + \delta_2) \cdot Hc$ is less than 50 G·cm·Oe, an insufficient reproduced output is obtained and bit error rate increases.

The coercive force Hc is determined taking into consideration the characteristics of the magnetic head employed in the recording/reproducing apparatus of a nontracking data reproducing system and power consumption into consideration. Generally, recording current of a recording/reproducing apparatus of a nontracking data reproducing system is 20 mA or below. Accordingly, the magnetic tape must be able to record recording signals of 20 mA or below. Satisfactory recording is impossible and reproduced output is reduced if the coercive force Hc exceeds 1200 Oe.

In reproducing recorded data by a recording/reproducing apparatus of a nontracking data reproducing system, the magnetic tape is loaded on a recording/reproducing apparatus by a nonloading system. The magnetic tape of the present invention having a longitudinal stiffness St not less than 2 and not greater than 10 exhibits satisfactory recording/reproducing characteristics when loaded by a nonloading system. If the longitudinal stiffness St is less than 2, the magnetic tape may possibly be slackened and a space is formed between the magnetic head gap of the magnetic head and the magnetic tape to cause a spacing loss. If the longitudinal stiffness St is greater than 10, the length of contact of the magnetic tape with the magnetic head is excessively small (less than 300 µm) particularly when the curvature of the contact surface of the magnetic head is large and the magnetic tape is unable to be in stable contact with the magnetic head, which also causes spacing loss.

On principle, the surface roughness Ra (µm) of the back surface of the nonmagnetic substrate 1 is calculated as a function of a surface roughness curve expressed by $y = f(x)$ by using an expression (1).

$$Ra = 1/l \int_{o}^{l} |f(x)| dx \qquad \cdots \cdots \cdots (1)$$

The approximate value of the surface roughness Ra can be calculated by an expression (2)

$$Ra \simeq (y_a + y_b + y_c + \ldots + Y_n)/n = \Sigma_a^x |y|/n \qquad \cdots (2)$$

According to the present invention, the value of Ra is calculated by using the expression (2) for n = 3000 and l = 2 mm.

If the surface roughness Ra calculated by using the expression (2) is less than 0.015, the friction between the back surface of the oblique evaporation magnetic tape and the tape guide post of the nonloading system is large and the magnetic tape is unable to run smoothly. If the surface roughness Ra is greater than 0.040, the tape guide post will be abraded rapidly by the magnetic tape.

The surface roughness Ra of the back surface of the magnetic tape is adjusted by forming a back coating film of a back coating material having appropriate particle size on the back surface of the nonmagnetic substrate. The back coating material may be any suitable material used generally in fabricating magnetic tapes of this kind. Preferably, the thickness of the back coating film is in the range of 0.6 µm to 1.0 µm in view of the thickness of the magnetic tape, coating accuracy and the effect of the back coating film on the surface roughness Ra. Generally, the thickness of the magnetic tape of this kind is 5 µm or below. If the thickness of the back coating film exceeds 1.0 µm, it is difficult to finish the magnetic tape in a thickness not greater than 5 µm. It is possible that the thickness of the back coating film is irregular and that the back coating film having a desired surface roughness cannot be formed if the desired thickness of the back coating film is less than 0.6 µm.

If necessary, the nonmagnetic substrate may be coated with a base film and the magnetic layer may be coated with a top coating film. There is no particular restriction on the materials of the base film and the top coating film; the base film and the top coating film may be formed of any suitable material generally used in fabricating magnetic recording media of this kind.

Example 1

The effect of the thickness $\delta_1 + \delta_2$ of the magnetic layer of a magnetic tape on the performance of the magnetic tape was examined.

A first ferromagnetic metal thin film and a second ferromagnetic metal thin film were formed sequentially in that order respectively by oblique evaporation cycles using a $Co_{80}Ni_{20}$ alloy evaporation source on a nonmagnetic substrate coated with a base film. In the second oblique evaporation cycle, the nonmagnetic substrate was fed in a direction opposite to that in which the nonmagnetic substrate was fed in the first oblique evaporation cycle. Then, the back surface of the nonmagnetic substrate was coated with a back coating film and the surface of the second ferromagnetic metal thin film was coated with a top coating film of a lubricant. The nonmagnetic substrate thus coated with those films was cut in magnetic tapes of a predetermined width and the magnetic tapes were put in cassettes.

In the oblique evaporation cycles, the incidence angle of the vapor of the evaporation source on the nonmagnetic substrate was in the range of 90° to 45° and oxygen gas was supplied at a supply rate of 200 $cm^3$/min. The thickness $\delta_1$ of the first ferromagnetic metal thin film and the thickness $\delta_2$ of the second ferromagnetic metal thin film were adjusted by regulating the moving speed of the nonmagnetic substrate while the intensity of electron beams for heating the evaporation source was regulated to maintain the evaporation rate of the evaporation source constant. A 2000 Å thick ferromagnetic metal thin film was formed when the moving speed of the nonmagnetic substrate was 14 m/min.

Thus, sample magnetic tapes differing from each other in the thickness $\delta_1$ of the first ferromagnetic metal thin film and the thickness $\delta_2$ of the second ferromagnetic metal thin film and meeting a condition: $\delta_1/\delta_2 = 1/0.5$ were fabricated. The sample magnetic tapes were subjected to forward-backward recording/reproducing operation and bit error rate was measured.

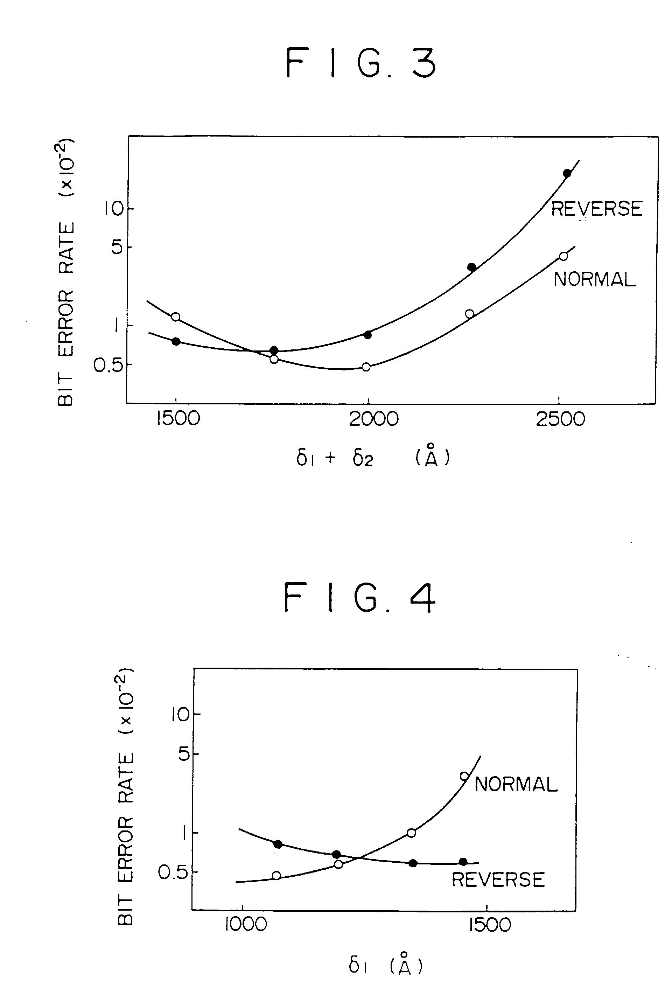

Table 1 shows the thickness $\delta_1$ of the first ferromagnetic metal thin film, the thickness $\delta_2$ of the second ferromagnetic metal thin film, the thickness $\delta_1+\delta_2$ of the magnetic layer, the coercive force Hc, the remanent magnetic flux density Br and bit error rate in reproducing recorded data of each sample magnetic tape. Fig. 3 shows the relation between the thickness $\delta_1+\delta_2$ of the magnetic layer and bit error rate of each sample magnetic tape.

As is obvious from Fig. 3, the variation of bit error rate with the thickness of the magnetic layer when the magnetic head is moved in the normal direction and the variation of bit error rate with the thickness of the magnetic layer when the magnetic head is moved in the reverse direction are represented approximately by upward concave hyperbolas each having a minimum. Bit error rate must be $1 \times 10^{-2}$ or below to obtain satisfactory reproduced signals by a recording/reproducing apparatus of a nontracking data reproducing system. When the thickness of the magnetic layer is in the range of 1600 Å to 2000 Å, bit error rate is $1 \times 10^{-2}$ or below regardless of the direction of movement of the magnetic head relative to the magnetic tape. Thus, the thickness $\delta_1+\delta_2$ of the magnetic layer of a magnetic tape suitable for reproducing operation of a nontracking data reproducing system is in the range of 1600 Å to 2000 Å.

Example 2

The effect of the thickness ratio $\delta_2/\delta_1$ of a magnetic tape on the performance of the magnetic tape was examined.

Sample magnetic tapes respectively having magnetic layers differing from each other in thickness ratio $\delta_2/\delta_1$ and having a thickness $\delta_1+\delta_2 = 1800$ Å were fabricated by the same oblique evaporation process as that employed in fabricating the sample magnetic tapes of Example 1. The sample magnetic tape were subjected to forward-backward recording/reproducing operation. Bit error rates of signals reproduced from the sample magnetic tapes were measured.

Table 2 shows the thickness $\delta_1$ of the first ferromagnetic metal thin film, the thickness $\delta_2$ of the second ferromagnetic metal thin film, thickness ratio $\delta_2/\delta_1$, the coercive force Hc, the remanent magnetic flux density Br and bit error rate of each sample magnetic tape. Fig. 4 shows the relation between the thickness $\delta_1$ of the first ferromagnetic metal thin film and bit error rate of each sample magnetic tape.

As is obvious from Fig. 4, bit error rate increases with the increase of the thickness $\delta_1$ of the first ferromagnetic metal thin film when the magnetic head is moved in the normal direction relative to the magnetic tape, and bit error rate increases with the decrease of the thickness $\delta_1$ of the first ferromagnetic metal thin film when the magnetic head is moved in the reverse direction. When the thickness $\delta_1$ is in the range of 1080 Å to 1350 Å, bit error rate is not greater than $1 \times 10^{-2}$ regardless of the direction of movement of the magnetic head relative to the magnetic tape. Accordingly, magnetic tapes having a thickness ratio $\delta_2/\delta_1$ in the range of 1/3 to 2/3 are suitable for reproducing operation of a nontracking data reproducing system.

Example 3

The energy product $Br \cdot (\delta_1 + \delta_2) \cdot Hc$ and coercive force Hc of the magnetic layers of sample magnetic tapes were examined.

Sample magnetic tapes were fabricated by the same oblique evaporation process as that employed in fabricating the sample magnetic tapes of Example 1, except that a $Co_{80}Ni_{20}$ alloy and $Co_{100}$ were used as evaporation sources and oxygen gas supply rate was regulated to adjust remanent magnetic flux density Br and coercive force Hc. The sample magnetic tapes were subjected to forward-backward recording/reproducing operation to measure reproduced output and optimum recording current.

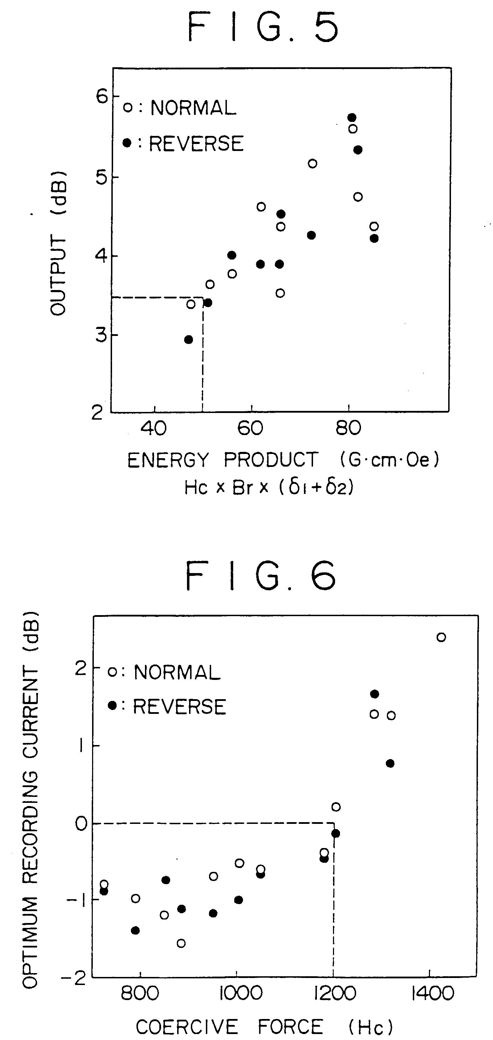

Table 3 shows the oxygen gas supply rate in fabricating each sample magnetic tape, the coercive force Hc, the remanent magnetic flux density Br and the energy product $Br \cdot (\delta_1 + \delta_2) \cdot Hc$, reproduced output and optimum recording current of each sample magnetic tape. Fig. 5 shows the relation between energy product and reproduced output represented by the ratio of the reproduced output obtained from the sample magnetic tape to that obtained from a coated magnetic tape, and Fig. 6 shows the relation between coercive force Hc and optimum recording current (dB) with reference to 20 mA.

As is obvious from Fig. 5, reproduced output increases with the increase of energy product regardless of the direction of movement of the magnetic head relative to the magnetic tape. Since reproduced output must be +3.5 dB or above to limit bit error rate to a value not greater than $1 \times 10^{-2}$ in reproducing recorded data by a recording/reproducing apparatus of a nontracking data reproducing system, the energy product of the magnetic tape must be 50 G·cm·Oe or above. Therefore, the coercive force Hc and the remanent magnetic flux density Br of the magnetic tapes for use on a recording/reproducing apparatus of a nontracking system must be adjusted so that the energy product is not smaller than 50 G·cm·Oe.

Optimum recording current for a recording/reproducing apparatus of a nontracking data reproducing system is 20 mA or below. As is obvious from Fig. 6, optimum recording current is 20 mA or below when the coercive force Hc is 1200 Oe or below.

The electromagnetic conversion characteristics and magnetic characteristics of the sample magnetic tapes in the foregoing examples were measured by the following measuring instruments.

Magnetic Characteristics (Hc, Br)
   Instrument: Vibrating sample type magnetometer
Electromagnetic Conversion Characteristics (Optimum current, Reproduced output, Bit error rate)

   Instrument: NT-1 (modified), SONY
   Head: Type: MIG, Cores: Single crystal MnZn ferrite, Magnetic head gap: Sendust, Gap length: 0.22 µm
   Recording wavelength: 0.67 µm
   Sampling frequency: 32 kHz
   Number of bits for quantization: 12 bits

Example 4

The longitudinal stiffness St of sample magnetic tapes was examined.

Sample magnetic tapes were fabricated by the same oblique evaporation process as that employed in fabricating the sample magnetic tapes of Example 1, except that nonmagnetic substrates shown in Table 1 differing from each other in material and thickness were used. The contact length, i.e., the length of contact of each sample magnetic tape with a magnetic head, was measured. Table 4 shows the stiffness St and contact length of each sample magnetic tape.

Stiffness St was measured by a strain gauge.

Contact length is represented by the distance between two points where spacing changes sharply. Spacing was measured by a spacing measuring instrument of an interference type provided with a glass head with a prism. The glass head of 87 µm in width, 28 µm in projection and 6.8 mm in radius of curvature was used.

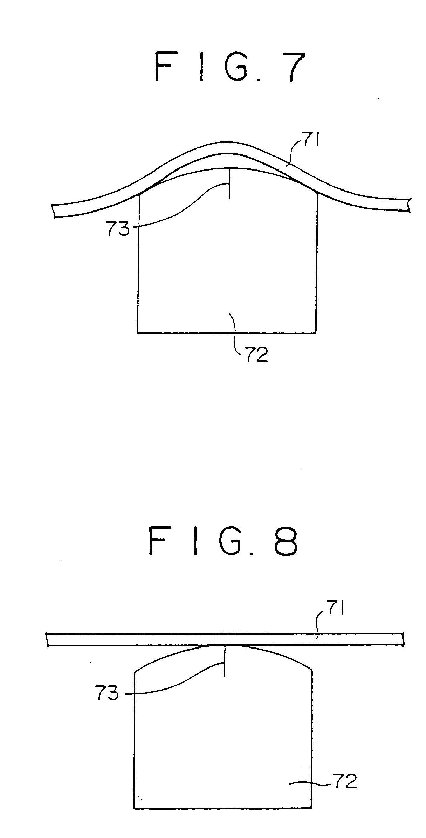

As shown in Fig. 7, the sample magnetic tape (71) having a stiffness St of 1.2 meandered on the magnetic head (72) and a portion of the same corresponding to the magnetic head gap (73) floated and hence the contact length of the sample magnetic tape could no be measured. The sample tapes (71) having a stiffness St of 11.6 and 19.1 could not extend in perfect contact with the curved contact surface of the magnetic head (72). The stiffness St must be in the range of 2 to 10.

Example 5

The effect of the surface roughness Ra of the back surface of magnetic tapes on the abrasion of the tape guide post and on the running smoothness of the magnetic tapes was examined.

Sample magnetic tapes were fabricated by the same oblique evaporation process as that employed in fabricating the sample magnetic tapes in Example 1, except that the back coating films were formed of mixtures of carbon black and a binder filtered respectively by filters shown in Table 5.

The surface roughness of the sample magnetic tapes, friction coefficient between the tape guide post and the sample magnetic tapes and the abrasion of the tape guide post were measured. Measured results are shown in Table 5.

Surface roughness and friction coefficient were measured under the following conditions.

Surface Roughness

   Instrument: TALY STEP, Rank-Tailor-Hobson

Needle: Square needle, 0.1 µm × 2.5 µm
Measuring length: 2 mm
Needle speed: 0.025 mm/sec
Filter: 0.33 Hz
Roughness calculator: PC-9801, NEC

Friction Coefficient

Instrument: SOFT-1200F, SONY
Tape guide post: Polyacetal post ($Ra_{max} = 0.5$)
Tape tension: 5 g
Contact angle: 60°
Number of rubbing cycles: 200

As shown in Table 5, the friction coefficient between the tape guide post and the sample magnetic tapes having a surface roughness less than 0.017 is large and these sample magnetic tapes are unable to run smoothly. The sample magnetic tapes having a surface roughness exceeding 0.038 abraded the tape guide post excessively and the output characteristics of these sample magnetic tapes were unstable. Thus, the surface roughness Ra of the back surface of the magnetic tapes suitable for nonloading recording/reproducing operation is in the range of 0.015 to 0.040.

Although the invention has been described in its preferred form with a certain degree of particularity, obviously many changes and variations are possible therein.

Table 1

| $\delta_1$ (Å) | $\delta_2$ (Å) | $\delta_1 + \delta_2$ (Å) | Hc (Oe) | Br (G) | Hc X Br X ($\delta_1 + \delta_2$) (Oe·cm·G) | Bit error rate (x10$^{-2}$) | |
|---|---|---|---|---|---|---|---|
| | | | | | | Normal | Reverse |
| 1000 | 500 | 1500 | 1100 | 3210 | 53 | 1.2 | 0.8 |
| 1170 | 580 | 1750 | 1050 | 3400 | 62 | 0.6 | 0.7 |
| 1330 | 670 | 2000 | 1060 | 3410 | 72 | 0.5 | 0.9 |
| 1500 | 750 | 2250 | 1000 | 3880 | 87 | 1.2 | 3.5 |
| 1670 | 830 | 2500 | 1120 | 3270 | 92 | 2.4 | 12 |

Table 2

| $\delta_1$ (Å) | $\delta_2$ (Å) | $\delta_2 / \delta_1$ | Hc (Oe) | Br (G) | Hc X Br X ($\delta_1 + \delta_2$) (Oe·cm·G) | Bit error rate (x10$^{-2}$) | |
|---|---|---|---|---|---|---|---|
| | | | | | | Normal | Reverse |
| 1440 | 360 | 0.25 | 1010 | 3400 | 62 | 3.5 | 0.6 |
| 1350 | 450 | 0.33 | 1040 | 3340 | 63 | 1.0 | 0.6 |
| 1200 | 600 | 0.50 | 1070 | 3380 | 65 | 0.6 | 0.7 |
| 1080 | 720 | 0.67 | 1040 | 3330 | 62 | 0.5 | 0.8 |

Table 3

| Evaporation source | O₂ supply rate (cm³/min) | | Hc (Oe) | Br (G) | Hc X Br X ($\delta_1 + \delta_2$) (Oe·cm·G) | Normal | | Reverse | |
|---|---|---|---|---|---|---|---|---|---|
| | First ferro-magnetic metal thin film | Second ferro-magnetic metal thin film | | | | Optimum recording current (dB) | Reproduced output (dB) | Optimum recording current (dB) | Reproduced output (dB) |
| $Co_{80}$-$Ni_{20}$ | 200 | 100 | 890 | 3500 | 56 | −1.6 | +3.8 | −1.1 | +4.0 |
| | 100 | 200 | 790 | 3450 | 48 | −1.0 | +2.9 | −1.4 | +3.4 |
| | 200 | 200 | 1070 | 3380 | 65 | −0.6 | +4.4 | −0.7 | +4.5 |
| | 200 | 300 | 1200 | 3340 | 72 | +0.2 | +5.2 | −0.2 | +4.3 |
| | 300 | 300 | 1450 | 3280 | 86 | +2.4 | +4.3 | +2.9 | +4.2 |
| $Co_{100}$ | 100 | 100 | 740 | 2900 | 52 | −0.8 | +3.6 | −0.9 | +3.4 |
| | 200 | 100 | 1010 | 3610 | 66 | −0.5 | +3.5 | −1.0 | +3.8 |
| | 100 | 200 | 960 | 3560 | 62 | −0.7 | +4.6 | −1.2 | +3.8 |
| | 200 | 200 | 1290 | 3480 | 81 | +1.4 | +5.6 | +1.6 | +5.7 |
| | 200 | 300 | 1320 | 3440 | 82 | +1.4 | +4.8 | +0.7 | +5.3 |

Table 4

| Nonmagnetic substrate | | Stiffness | Contact length (µm) |
|---|---|---|---|
| Material | Thickness (µm) | | |
| Polyethylene terephthalate | 3.2 | 1.2 | Unmeasurable |
| Polyethylene terephtalate | 4.0 | 2.1 | 620 |
| Polyamide | 3.8 | 5.1 | 560 |
| Polyamide | 5.0 | 11.6 | 290 |
| Polyamide | 6.0 | 19.0 | 70 |

Table 5

| Filter | Surface roughness Ra | Friction coefficient µ | Depth of abrasion (µm) | Number of abrading cycle |
|---|---|---|---|---|
| P-15 | 0.011 | 0.61 | 4.3 | 20 ~ 30 |
| P-20 | 0.017 | 0.51 | 6.2 | 190 ~ 200 |
| P-30 | 0.038 | 0.38 | 8.4 | $\geq$ 200 |
| P-40 | 0.060 | 0.25 | 14.2 | $\geq$ 200 |

## Claims

1. A magnetic recording medium comprising: a nonmagnetic substrate (1); and a magnetic layer consisting of a first ferromagnetic metal thin film (2) of an orthorhombic, columnar structure formed on the nonmagnetic substrate (1), and a second ferromagnetic metal thin film (3) of an orthorhombic, columnar structure formed on the first ferromagnetic metal thin film (2);

   wherein the direction of growth of the orthorhombic, columnar structure of the first ferromagnetic metal thin film (2) and that of the orthorhombic, columnar structure of the second ferromagnetic metal thin film (3) are opposite to each other, and the recording medium meets the conditions:

$$1600 \text{ Å} \leq \delta_1 + \delta_2 \leq 2000 \text{ Å}$$

$$1/3 \leq \delta_2/\delta_1 \leq 2/3$$

$$Hc \leq 1200 \text{ Oe}$$

$$Br \cdot (\delta_1 + \delta_2) \cdot Hc \geq 50 \text{ G} \cdot \text{cm Oe}$$

$$0.015 \leq Ra \leq 0.040$$

   where $\delta_1$ is the thickness of the first ferrogmagnetic metal thin film (2), $\delta_2$ is the thickness of the second ferromagnetic metal thin film (3). Hc is the coercive force of the magnetic layer, Br is the remanent magnetic flux density of the magnetic layer, and Ra is the surface roughness of the back surface of the nonmagnetic substrate opposite to the surface of the same on which the magnetic layer is formed.

## Patentansprüche

1. Magnetischer Aufzeichnungsträger mit: einem unmagnetischen Substrat (1) und einer magnetischen Schicht aus einem ersten ferromagnetischen Metalldünnfilm (2) mit orthorhombischer Säulenstruktur, der auf dem unmagnetischen Substrat (1) ausgebildet ist, und einem zweiten ferromagnetischen Metalldünnfilm (3) aus einer orthorhombischen Säulenstruktur, der auf dem ersten ferromagnetischen Metalldünnfilm (2) ausgebildet ist;
wobei die Wachstumsrichtung der orthorhombischen Säulenstruktur des ersten ferromagnetischen Metalldünnfilms (2) sowie diejenige der orthorhombischen Säulenstruktur des zweiten ferromagnetischen Metalldünnfilms (3) zueinander entgegengesetzt sind und der Aufzeichnungsträger den folgenden Bedingungen genügt:

$$1600 \text{ Å} \leq \delta_1 + \delta_2 \leq 2000 \text{ Å}$$

$$1/3 \leq \delta_2/\delta_1 \leq 2/3$$

$$Hc \leq 1200 \text{ Oe}$$

$$Br \cdot (\delta_1 + \delta_2) \cdot Hc \geq 50 \text{ G} \cdot cm \text{ Oe}$$

$$0.015 \leq Ra \leq 0.040$$

wobei $\delta_1$ die Dicke des ersten ferromagnetischen Metalldünnfilms (2) ist, $\delta_2$ die Dicke des zweiten ferromagnetischen Metalldünnfilms (3) ist, Hc die Koerzitivfeldstärke der magnetischen Schicht ist, Br die magnetische Remanenzflussdichte der magnetischen Schicht ist und Ra die Oberflächenrauhigkeit der Rückseite des unmagnetischen Substrats ist, die von derjenigen Oberfläche desselben abgewandt ist, auf der die magnetische Schicht ausgebildet ist.

**Revendications**

1. Support d'enregistrement magnétique comprenant un substrat non magnétique (1) et une couche magnétique constituée d'une première couche mince d'un métal ferromagnétique (2) ayant une structure colonnaire orthorhombique formée sur le substrat non magnétique (1), et d'une seconde couche mince d'un métal ferromagnétique (3) de structure colonnaire orthorhombique formée sur la première couche mince (2) d'un métal ferromagnétique, dans lequel la direction de croissance de la structure colonnaire orthorhombique de la première couche mince (2) d'un métal ferromagnétique et celle de la structure colonnaire orthorhombique de la seconde couche mince (3) d'un métal ferromagnétique sont opposées, et le support d'enregistrement remplit les conditions suivantes :

$$160 \text{ nm} \leq \delta_1 + \delta_2 \leq 200 \text{ nm}$$

$$1/3 \leq \delta_2/\delta_1 \leq 2/3$$

$$Hc \leq 1\,200 \text{ Oe}$$

$$Br \cdot (\delta_1 + \delta_2) \cdot Hc \geq 50 \text{ G.cm.Oe}$$

$$0{,}015 \leq Ra \leq 0{,}040$$

$\delta_1$ étant l'épaisseur de la première couche mince (2) d'un métal ferromagnétique, $\delta_2$ étant l'épaisseur de la seconde couche mince (3) d'un métal ferromagnétique, Hc étant le champ coercitif de la couche magnétique, Br étant la densité de flux magnétique rémanent de la couche magnétique, et Ra étant la rugosité de la surface arrière du substrat non magnétique opposée à la surface du substrat sur laquelle est formée la couche magnétique.

# FIG. 1

# FIG. 2

# F I G. 3

# F I G. 4

# F I G. 5

# F I G. 6

# F I G. 7

# F I G. 8

# F I G. 9

# F I G. IO
# PRIOR ART